# EUROPEAN PATENT SPECIFICATION

(11) **EP 0 846 404 B1**
(45) Date of publication and mention of the grant of the patent: **30.10.2002**
(21) Application number: 96928524.6
(22) Date of filing: 21.08.1996
(51) Int. Cl.: H04Q 9/14, G08C 15/00, B60R 16/02

(54) **DATA COMMUNICATIONS BETWEEN REMOTE SENSORS AND CENTRAL ECU IN MOTOR VEHICLES**
DATENUBERTRAGUNG ZWISCHEN ENTFERNTEN SENSOREN UND ZENTRALER ELEKTRONISCHEN STEUEREINRICHTUNG IN KRAFTFAHRZEUGEN
COMMUNICATIONS DE DONNEES ENTRE DES DETECTEURS A DISTANCE ET UNE UNITE DE COMMANDE ELECTRONIQUE DANS DES VEHICULES AUTOMOBILES

(30) Priority: 23.08.1995 GB 9517215
(43) Date of publication of application: 10.06.1998
(73) Proprietor: Meritor Automotive, Inc., Troy, Michigan 48084 (US)
(72) Inventor: VINCENT, Kenneth, Alcester Warwickshire B49 6QE (GB); WILSON, James, Henton, Coventry CV3 4EB (GB)
(74) Representative: W.P. Thompson & Co.
(86) International application number: GB9602035
(87) International publication number: WO97008915

(56) References cited:
- EP-A- 0 134 174
- EP-A- 0 393 233
- WO-A-89/04032
- WO-A-94/18803
- DE-A- 3 329 049
- FR-A- 2 509 889
- MEDICAL AND BIOLOGICAL ENGINEERING AND COMPUTING, vol. 27, no. 2, 1 March 1989, STEVENAGE,GB, pages 215-220, XP000071968 EVANS N E: "BASEBAND TRANSMIT AND RECEIVE PROCESSORS FOR TWO-CHANNEL PWM TELEMETRY"

## Description

The present invention relates to data communications between a central electronic control unit (ECU) in a motor vehicle and remote sensors in/on that vehicle.

With the integration of electronics within the distributed vehicle control, a need has arisen to reduce the number of connecting wires between sensors and the controlling electronics. This is particularly important when routing cables through bulkheads from the cab area since manufactures prefer to keep the number of connection ways as small as possible.

Most existing sensors require three wires, two for supplies and a signal wire. As this signal is in analogue form, it can easily be subject to external interference, possibly RFI radiation, as any injected noise could generate a valid, although-incorrect, output signal.

It is known in some existing systems for the transfer of data between sensors and the receiving electronics to be via a serial data link. This approach, while providing a more secure data transfer requires intelligence at the transmitting end as well as the receiver. A disadvantage of this system is therefore that this additional intelligence increases the cost and complexity of the sensors without reducing the number of connections.

In other known systems, the transfer of data has been via a 4 - 20mA current loop. This approach reduces the number of connections and also provides a measure of immunity to high resistance connections as current is measured, rather than voltage. The disadvantage of this method, however, is that the data is still being transmitted as an analogue signal, making it susceptible to external interference that could corrupt the signal.

In a further known system disclosed in DE-A-3329049 a plurality of substations are connected in parallel to a two-wire transfer line. The substations are selected by modulation of a voltage on one of the two wires of the two-wire transfer line with call-up signals. Data is transferred from the substations by modulation of the current in the other wire of the two-wire transfer line. The latter system therefore still requires the presence of two-wires for its operation.

In accordance with the present invention, there is provided a data communications system comprising an interface circuit for coupling one or more signal sources to a remote computer-based controller by a single wire which carries supply current to the interface circuit, the return path being via system earth and a means for transferring signal data from the signal source or sources to said single wire, and hence to said remote computer-based controller in digital form by modulation of said supply current.

Preferably pulse width modulation of the supply current is used to transmit the data.

In one embodiment a variable signal and an ON-OFF signal from two respective signal sources can be transmitted by arranging for the modulated current signal carrying information corresponding to said variable signal to be inverted by state change of the ON-OFF signal. This can be achieved for example, by supplying to the two inputs of an exclusive-OR element a pulsed signal modulated in accordance with the signal from said variable signal source and a two-state signal corresponding to said ON-OFF signal, respectively.

Advantageously, in some embodiments, the computer-based controller is adapted to be able to change the supply voltage provided to the interface circuit via said single wire, the interface circuit being arranged to recognise a change in the supply voltage thereto and to select an alternative signal source whose signal is then transmitted in place of the signal of the first mentioned signal source. By this means at least two variable signal sources can supply data, in addition (if required) to ON-OFF signals, via said single wire to said remote computer based controller.

For transmitting signals from multiple data sources, a micro-controller can be incorporated into the interface circuit for converting the signals from said multiple data sources into coded current pulses for transmission sequentially to the remote controller.

When the present invention is applied to the transmission of a brake pedal signal, the brake pedal demand transducer would thus have integral electronics that takes the demand signal and the brake switch signal and combines them into digital current modulation. This combined information is then transferred between the transmitting device and the receiving ECU via a single wire. This single wire provides power to operate the sensor as well as the return route for the information, the information transfer being in the form of modulated current pulses.

Thus, use of the invention has the advantage of combining and transmitting both of the input signals, and the supply to the transducers, down a single wire, while using a digital signal to transfer the information.

The invention is described further hereinafter, by way of example only, with reference to the accompanying drawings, in which:-
Fig. 1 shows a first embodiment in accordance with the present invention wherein the brake lamp relay of a vehicle is controlled by a brake switch connected into the supply side to the relay;
Fig. 2 shows one example of the internal design of the electronic demand transducer in the system of Fig. 1;
Fig. 3 shows an embodiment similar to that of Fig. 1 but with the brake switch connected into the ground return side of the relay;
Fig. 4 shows an example similar to that of Fig. 2 but incorporating two demand responsive sensors; and
Fig. 5 illustrates how the system of Fig. 4 can be modified to include more than two sensors.

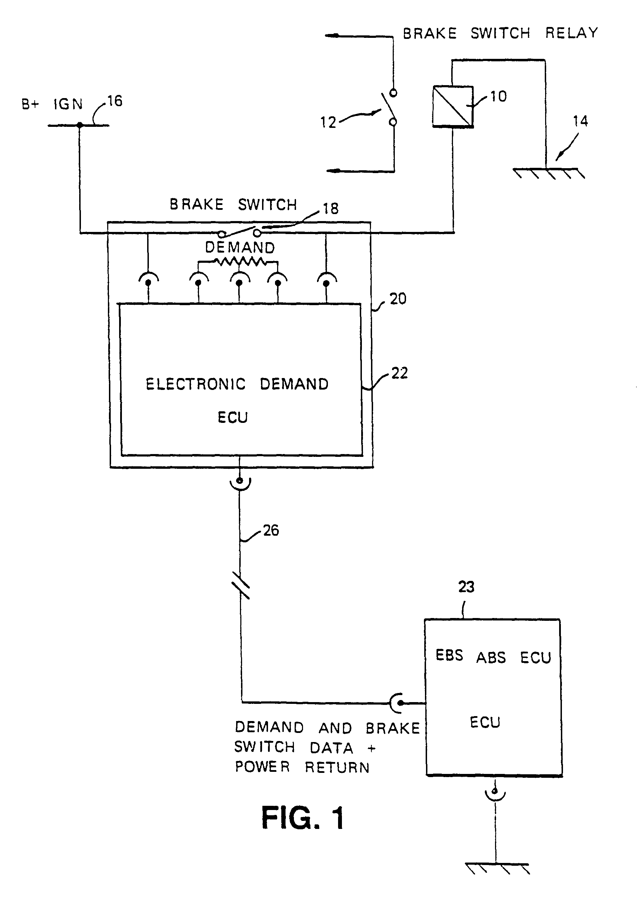

Referring first to Fig. 1, there is shown a brake lamp relay 10 controlling a switching circuit 12 for a brake lamp (not shown). The return connection for the relay is made via the vehicle body (system earth) at 14. The relay 10 is supplied from the vehicle ignition controlled supply 16 via switching contacts 18 of a brake switch unit 20 whose opening and closing is responsive to operation and release of the vehicle brake pedal (not shown). As well as powering the brake lamp switch 18 and relay 10, the supply connection is used to power an electronic demand transducer (e.c.u) 22 within the brake switch unit 20, while the return path for transmitted data from the demand transducer 22 is arranged to be via a remotely located main controlling ECU 23 (e.g. the main EBS/ABS ECU) by way of a single wire 26.

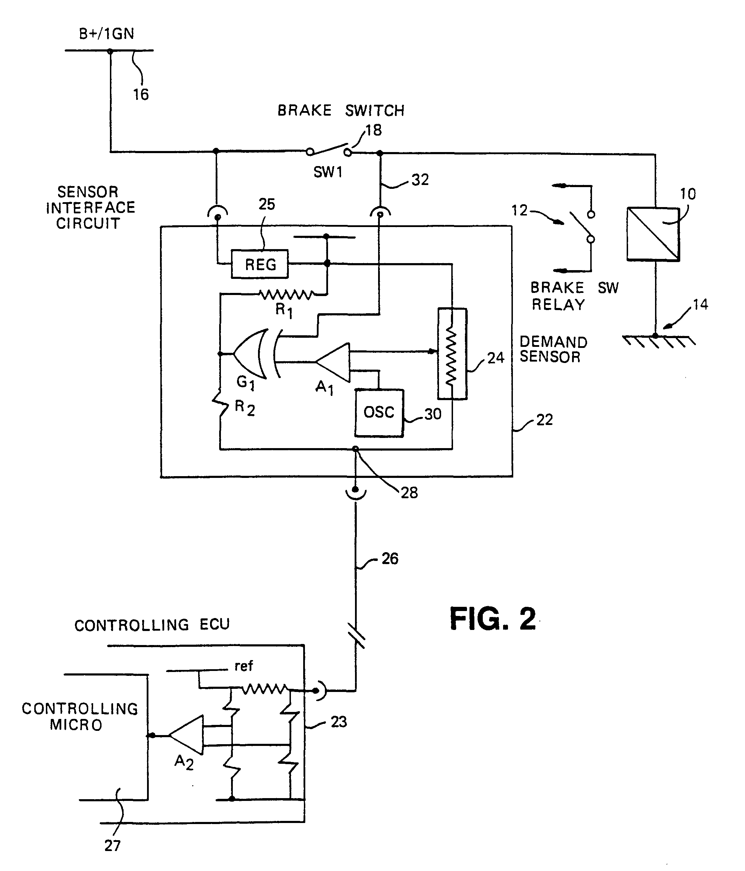

Referring now to Fig. 2 one possible example of the detailed circuitry for the electronic demand ecu 22 within the brake switch unit 20 is now described. This includes a demand sensor 24 in the form of a potentiometer whose one end is connected via a regulator 25 to the ignition-controlled power source 16 and whose other end is coupled to a junction point 28 connected to the single wire 26 leading to the controlling (remote) ECU 23. The variable slider of the potentiometer 24 is connected to one input of a comparator A₁, whose second input is connected to an oscillator 30 producing a sawtooth waveform. The output of the comparator A₁, forms one input of an exclusive OR gate G₁, whose second input is coupled via a line 32 to a point between the brake switch 18 and the relay 10, ie a point that will be at B⁺ volts when the brake switch 18 is actuated but at ground volts when the brake switch 18 is open. The output of the exclusive - OR gate G₁ is coupled firstly to the output of regulator 25 via a resister R₁ and secondly to the junction point 28 via a resistor R₂.

Within the ECU 23, the single wire 26 provides two inputs to a comparator A₂ via respective resistive dividers, the output of comparator A₂ being connected to the controlling microcomputer 27 of the ECU 23.

This arrangement operates as follows:

The raw supply voltage B⁺ is regulated by the regulator 25 to provide a stable supply voltage for the demand transducer 24 and the other internal electronics. A quiescent current will always be flowing from the brake switch supply B⁺ to the controlling ECU 23 (while the system is in operation) via the single wire 26. This current is arranged to be modulated digitally to transfer data from the electronic demand transducer to the controlling ECU 23, the frequency of modulation being fixed and only the pulse width being varied. For this purpose the sawtooth generator 30 provides a fixed frequency waveform that, when fed into the comparator A₁, produces a pulse width modulated signal dependent on demand potentiometer 24 position. This pulse-width modulated signal is applied to the exclusive - OR gate G₁ so that, when there is zero signal from the brake switch, the pulse-width modulated signal is effectively transmitted by the exclusive - OR gate G₁ to the junction 28 via R₂. On the other hand, if the brake switch is actuated so that a continuous high signal is presented to one input of the exclusive - OR gate G₁, the latter gate will only provide a high output when the pulse-width modulated signal is low, ie the latter signal is effectively inverted/transposed before being transmitted to the junction 28. This enables the receiving controller 23 to distinguish between the two input signals.

The application of the pulse-width modulated signal to the junction 28 changes the current being returned via the single wire 25 to the main ECU 23, and it is this change in current that is used to transfer the brake switch and demand potentiometer signals to the remote ECU 23.

The use of pulse width modulation enables the monitoring ECU 23 to detect any errors if external transients affect the normal operating frequency. The level of modulation from the demand signal is arranged to always be less than 50% so that the ratio can be inverted when the brake switch signal is present. This approach has the advantage that digitally coding the signals as a pulse width, a higher immunity to external noise is gained, while only using a single wire connection to the controlling ECU.

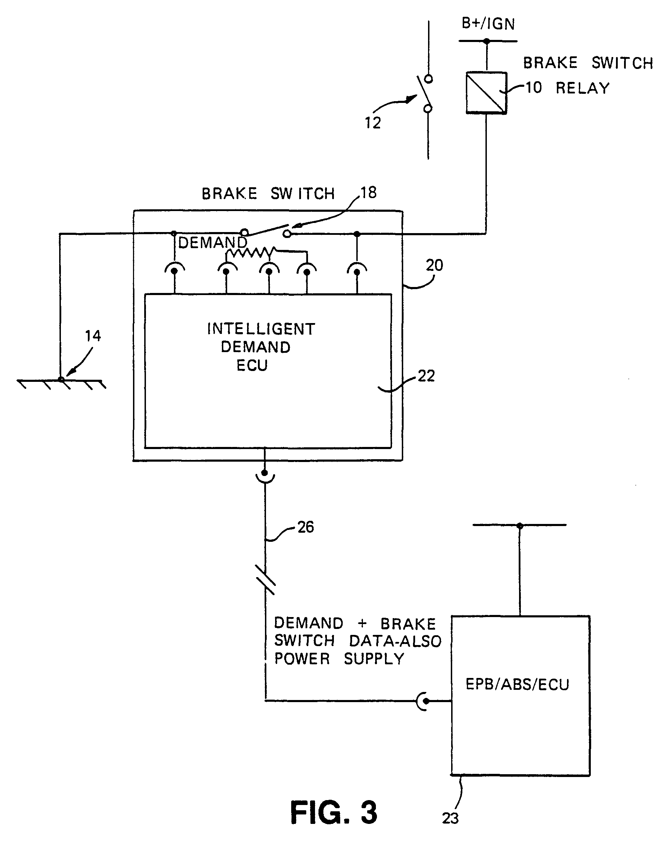

In other embodiments, the above-described concept can equally well be applied to a ground return connected brake switch as illustrated in Fig. 3 where equivalent components have been given the same reference numerals.

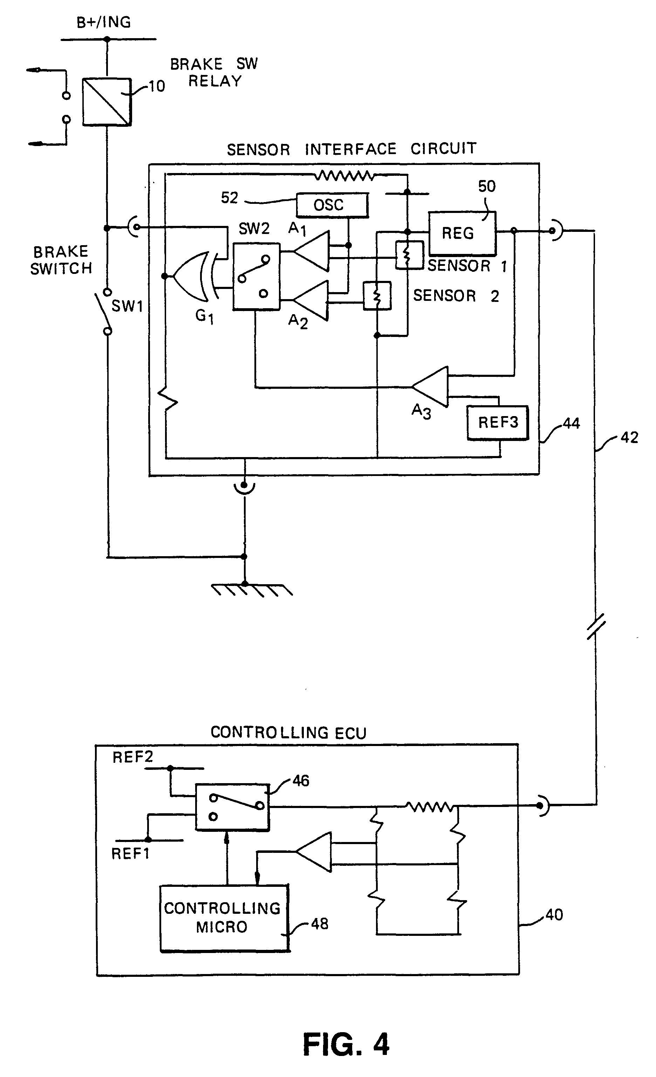

Fig. 4 shows a further modification which is adapted to operate with two brake pedal sensors and a brake switch, ie two variable output sensors S₁ and S₂ and an on/off (brake) switch.

In this case, the sensor interface circuit is located in the ground return from the relay 10, as in Fig. 3. The arrangement is further different to that of Figs. 1 and 2 in that the controlling ECU 40, as well as receiving the modulated current signal via a single wire 42, has the ability to change the supply voltage going to the sensor interface circuit 44. This is done for the purpose of communicating information/instructions to the interface circuit 44. In this example, the information is used to select between the two sensor signals as to which is to provide signals for the ECU 40.

The control ECU 40 has two voltage supply sources Ref₁ and Ref₂, either one of which can be selected by a switch 46 controlled by a controlling microcomputer 48 to supply its voltage to the single wire 42. The latter raw supply voltage is regulated in a regulator 50 within the interface circuit 44 to provide a stable supply voltage for the demand transducers S₁ and S₂ and the other internal electronics. A sawtooth generator 52 provides a fixed frequency waveform that, when fed into the comparators A₁ and A₂ can produce two pulse width modulated signals dependent on each of the demand potentiometer positions, respectively. Either of these signals can be selected by a switch SW₂ dependent on the supply voltage being supplied by the controlling ECU 40. The latter voltage is monitored by a comparator A₃ and when the required change is detected, switch SW₂ is set in the appropriate position to enable the correct sensor selection. As with the embodiment shown in Fig. 2, the brake switch can again transpose the output signal via the exclusive - OR gate G₁. Again this modulated output signal is used to change the current being returned to the main ECU, and it is this change in current that is used to transfer the brake switch and demand potentiometer signals. The controlling ECU will select either Ref₁ or Ref₂ to request information from either sensor.

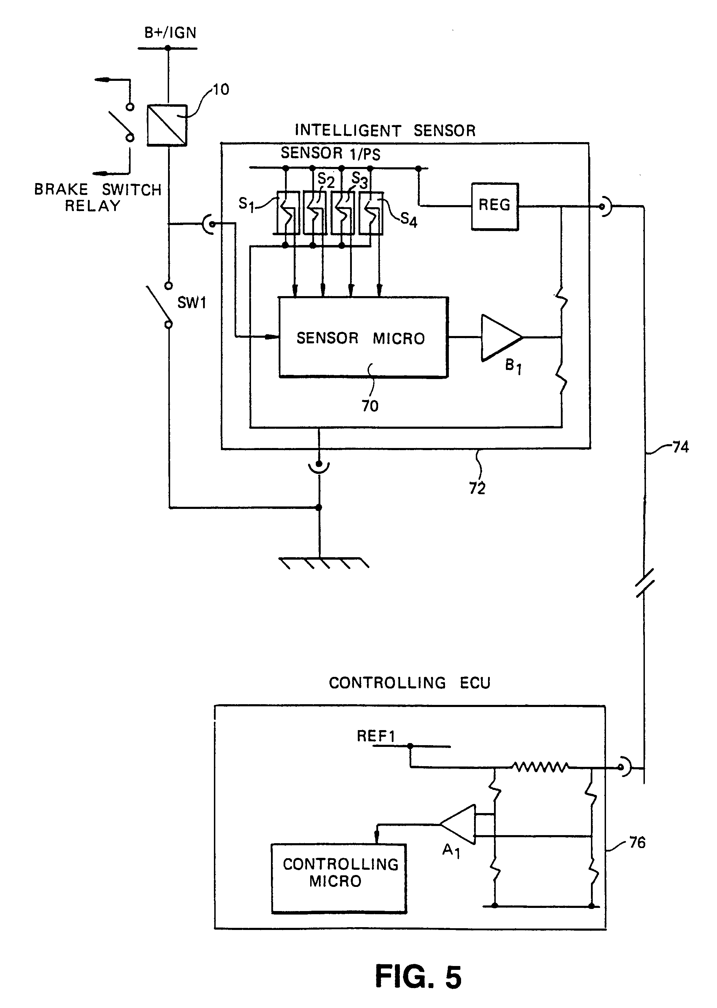

By increasing the complexity of the interface circuit it is possible to have more than two input signals. The transmission of information would then be changed from a pulse width to a pulse code. While this transmission is still via current modulation, coded information is sent as a larger quantity of data is needed. An example of such a system is shown in Fig. 5. To provide for this coding, the interface circuit 70 contains a micro-controller 72. This micro-controller 72 receives the raw input signals from a plurality of sensor devices (S1...S4) and converts their values into coded current pulses to be transmitted over the single supply wire 74 to the controlling ECU 76.

The systems described above in accordance with the present invention have the advantages of reducing the number of connections needed between the sensor(s) and the controlling ECU, improving reliability, and also maintaining a quiescent current through the remaining connections. Furthermore, since the signal(s) are transmitted in digital form, the noise immunity of the signal(s) is increased compared to known arrangements using analog information signals.

In the systems described, using the presently described system to transfer brake demand information from an electronic pedal to the controlling ECU, only a single connection is required. In addition to the demand signal, a digital indication of the pedal position, (the brake pedal switch), is also transmitted. This switch, as well as controlling the brake lights, provides additional information about the state of the brake demand. This additional information has always been supplied using a separate wire from this switch to the controlling ECU, but using the present system the brake switch state can also be transferred down the same demand connection. This inclusion further reduces the wire and connector count.

## Claims

1. A data communications system having an interface circuit (22) which couples one or more signal sources (24) to a remote computer-based controller (23), **characterised in that** the interface circuit (22) couples said one or more signal sources to said remote computer-based controller (23) by a single wire (26) carrying a supply current to the interface circuit, the return path being via system earth, and further **characterised by** means for transferring signal data from the signal source or sources (24) to said single wire (26), and hence to said remote computer-based controller (23), in digital form by modulation of said supply current.

2. A system as claimed in claim 1, wherein said modulation of said supply current is arranged to be effected within the interface circuit (22).

3. A system as claimed in claim 1 or 2, wherein said interface circuit (22) includes means for effecting pulse-width modulation of said supply current for transmission of said signal data.

4. A system as claimed in claim 1, 2 or 3, wherein to enable transmission via said single wire (26) of a variable signal and an ON-OFF signal from two respective said signal sources, the system includes a signal inversion device which is responsive to a state change of the ON-OFF signal to invert the modulated current signal carrying information corresponding to said variable signal.

5. A system as claimed in claim 4, wherein said current signal inversion device comprises an exclusive - OR element (G₁) whose two inputs receive respectively a pulsed signal modulated in accordance with the signal from said variable signal source and a two-state signal corresponding to said ON-OFF signal.

6. A system as claimed in claim 5, wherein said modulation of said pulsed signal is achieved by a sawtooth oscillator (30).

7. A system as claimed in any of claims 1 to 6, including switching means (46) within said computer-based controller (23) to selectively change the supply voltage provided to the interface circuit via said single wire (26).

8. A system as claimed in claim 7, including detection means (A₃, REF₃) within the interface circuit (22) which recognise a change in the supply voltage thereto from the controller (23) and select an alternative signal source (sensor 2) whose signal is then transmitted in place of the signal of the original signal source (sensor 1).

9. A system as claimed in any of claims 1 to 6, wherein at least two variable signal sources (sensor 1, sensor 2) supply data, in addition to ON-OFF signals, via said single wire (26) to said remote computer-based controller (23).

10. A system as claimed in any of claims 1 to 3, wherein for transmitting signals from multiple data sources (S₁, S₂, S₃, S₄), a micro-controller (70) is incorporated into the interface circuit (72) for converting the signals from said multiple data sources (S₁...S₄) into coded current pulses for transmission sequentially to the remote controller (76) via the single wire (74).

11. A system as claimed in claim 1 adapted to the transmission of a brake pedal signal from a brake pedal demand transducer (24) to the remote computer-based controller (23), wherein the brake pedal demand transducer (24) has integral electronics constituting the interface circuit (22) which takes the demand signal and the brake switch signal and combines them into digital current modulation, this combined information being then transferred between the interface circuit (22) and the receiving ECU (23) via the single wire (26), the single wire (26) providing power to operate the demand transducer (24) as well as the return route to the ECU (23) for the demand information transferred in the form of modulated current pulses.

## Patentansprüche

1. Datenkommunikationssystem mit einer Schnittstellenschaltung (22), die eine oder mehrere Signalquellen (24) mit einer computerbasierten Fernsteuerung (23) verbindet, **dadurch gekennzeichnet, dass** die Schnittstellenschaltung (22) die eine oder mehreren Signalquellen über einen einzelnen Draht (26), der einen Versorgungsstrom zu der Schnittstellenschaltung leitet, mit der computerbasierten Fernsteuerung (23) verbindet, wobei der Rückweg über Systemmasse verläuft, und des Weiteren **gekennzeichnet durch** ein Mittel zur Übertragung von Signaldaten von der Signalquelle oder den Signalquellen (24) zu dem einzelnen Draht (26) und daher zu der computerbasierten Fernsteuerung (23) in digitaler Form **durch** Modulation des Versorgungsstroms.

2. System nach Anspruch 1, wobei die Modulation des Versorgungsstroms innerhalb der Schnittstellenschaltung (22) ausgeführt wird.

3. System nach Anspruch 1 oder 2, wobei die Schnittstellenschaltung (22) ein Mittel zur Ausführung einer Pulsbreitenmodulation des Versorgungsstroms zur Übertragung der Signaldaten umfasst.

4. System nach Anspruch 1, 2 oder 3, wobei das System, um die Übertragung über den einzelnen Draht (26) eines variablen Signals und eines EIN-AUS-Signals von zwei jeweiligen Signalquellen zu ermöglichen, eine Signalumkehrungsvorrichtung umfasst, die auf eine Zustandsänderung des EIN-AUS-Signals reagiert, um das modulierte Stromsignal umzukehren, das Informationen trägt, die dem variablen Signal entsprechen.

5. System nach Anspruch 4, wobei die Stromsignalumkehrungsvorrichtung ein Exklusiv-ODER-Element (G₁) umfasst, dessen beide Eingänge jeweils ein gepulstes Signal, das entsprechend dem Signal von der variablen Signalquelle moduliert ist, und ein binäres Signal, das dem EIN-AUS-Signal entspricht, empfangen.

6. System nach Anspruch 5, wobei die Modulation des gepulsten Signals durch einen Sägezahnoszillator (30) erreicht wird.

7. System nach einem der Ansprüche 1 bis 6, das ein Umschaltmittel (46) in der computerbasierten Steuerung (23) umfasst, um die Versorgungsspannung, die über den einzelnen Draht (26) an die Schnittstellenschaltung angelegt wird, selektiv zu ändern.

8. System nach Anspruch 7, das Erfassungsmittel (A₃, REF₃) in der Schnittstellenschaltung (22) umfasst, die eine Veränderung der Versorgungsspannung, die von der Steuerung (23) daran angelegt wird, erkennen und eine alternative Signalquelle (Sensor 2) auswählen, deren Signal daraufhin anstelle des Signals der ursprünglichen Signalquelle (Sensor 1) übertragen wird.

9. System nach einem der Ansprüche 1 bis 6, wobei mindestens zwei variable Signalquellen (Sensor 1, Sensor 2) die computerbasierte Fernsteuerung (23) über den einzelnen Draht (26) zusätzlich zu EIN-AUS-Signalen mit Daten versorgen.

10. System nach einem der Ansprüche 1 bis 3, wobei zur Übertragung von Signalen von mehreren Datenquellen (S₁, S₂, S₃, S₄) ein Mikrocontroller (70) in die Schnittstellenschaltung (72) integriert ist, um die Signale von den mehreren Datenquellen (S₁...S₄) in codierte Stromimpulse umzuwandeln, um sie über den einzelnen Draht (74) zu der Fernsteuerung (76) sequentiell zu übertragen.

11. System nach Anspruch 1, das zur Übertragung eines Bremspedalsignals von einem Bremspedal-Bedarfswandler (24) zu der computerbasierten Fernsteuerung (23) ausgelegt ist, wobei der Bremspedal-Bedarfswandler (24) eine Integralelektronik aufweist, die die Schnittstellenschaltung (22) bildet, die das Bedarfssignal und das Signal des Bremslichtschalters aufnimmt und sie zu einer digitalen Strommodulation kombiniert, wobei diese kombinierte Information daraufhin über den einzelnen Draht (26) zwischen der Schnittstellenschaltung (22) und der Empfangs-ECU (23) übertragen wird, wobei der einzelne Draht (26) Strom bereitstellt, um den Bedarfswandler (24) sowie den Rückweg zu der ECU (23) für die Bedarfsinformationen, die in Form von modulierten Stromimpulsen übertragen werden, zu betreiben.

## Revendications

1. Système de transmission de données ayant un circuit d'interface (22) qui couple une ou plusieurs sources de signaux (24) à un contrôleur informatisé à distance (23), **caractérisé en ce que** le circuit d'interface (22) couple ladite une ou plusieurs sources de signaux audit contrôleur informatisé à distance (23) par un fil unique (26) portant un courant d'alimentation au circuit d'interface, la voie de retour se faisant par l'intermédiaire de la mise à la terre du système, et **caractérisé en outre par** des moyens pour transférer des données de signaux de la source ou des sources de signaux (24) audit fil unique (26), et donc audit contrôleur informatisé à distance (23), sous forme numérique par la modulation dudit courant d'alimentation.

2. Système tel que revendiqué dans la revendication 1, dans lequel ladite modulation dudit courant d'alimentation est arrangée pour être effectuée dans le circuit d'interface (22).

3. Système tel que revendiqué dans la revendication 1 ou 2, dans lequel ledit circuit d'interface (22) inclut des moyens pour effectuer la modulation de largeur d'impulsions dudit courant d'alimentation pour la transmission desdites données de signaux.

4. Système tel que revendiqué dans la revendication 1, 2 ou 3, dans lequel, pour permettre la transmission par l'intermédiaire dudit fil unique (26) d'un signal variable et d'un signal de MARCHE-ARRET provenant de deux sources de signaux respectives, le système inclut un dispositif d'inversion de signaux qui est sensible à un changement d'état du signal de MARCHE-ARRET afin d'inverser le signal de courant modulé portant des informations correspondant audit signal variable.

5. Système tel que revendiqué dans la revendication 4, dans lequel ledit dispositif d'inversion de signaux de courant comprend un élément OU exclusif (G₁) dont les deux entrées reçoivent respectivement un signal pulsé modulé selon le signal de ladite source de signal variable et un signal bistable correspondant audit signal de MARCHE-ARRET.

6. Système tel que revendiqué dans la revendication 5, dans lequel ladite modulation dudit signal pulsé est réalisée par un oscillateur à dents de scie (30).

7. Système tel que revendiqué dans l'une quelconque des revendications 1 à 6, incluant un moyen de commutation (46) dans ledit contrôleur informatisé (23) pour changer sélectivement la tension d'alimentation fournie au circuit d'interface par l'intermédiaire dudit fil unique (26).

8. Système tel que revendiqué dans la revendication 7, incluant des moyens de détection (A₃, REF₃) dans le circuit d'interface (22) qui reconnaissent un changement dans la tension d'alimentation de celui-ci provenant du contrôleur (23), et sélectionnent une source de signal alternative (capteur 2) dont le signal est alors transmis au lieu du signal de la source de signal d'origine (capteur 1).

9. Système tel que revendiqué dans l'une quelconque des revendications 1 à 6, dans lequel au moins deux sources de signaux variables (capteur 1, capteur 2) fournissent des données, en plus des signaux de MARCHE-ARRET, par l'intermédiaire dudit fil unique (26) audit contrôleur informatisé à distance (23).

10. Système tel que revendiqué dans l'une quelconque des revendication 1 à 3, dans lequel dans le but de transmettre des signaux des sources de données multiples (S₁, S₂, S₃, S₄), un micro-contrôleur (70) est incorporé dans le circuit d'interface (72) pour convertir les signaux provenant desdites sources de données multiples (S₁...S₄) en des impulsions de courant codées pour transmission de manière séquentielle au contrôleur à distance (76) par l'intermédiaire du fil unique (74).

11. Système tel que revendiqué dans la revendication 1, adapté pour la transmission d'un signal de pédale de frein provenant d'un transducteur de demande de pédale de frein (24), au contrôleur informatisé à distance (23), où le transducteur de demande de pédale de frein (24) a des éléments électroniques intégrants constituant le circuit d'interface (22), qui prend le signal de demande et le signal de commutation de frein et les combine en une modulation numérique de courant, ces informations combinées étant transférées entre le circuit d'interface (22) et l'UCE réceptrice (23) par l'intermédiaire du fil unique (26), le fil unique (26) fournissant la puissance pour faire fonctionner le transducteur de demande (24) ainsi que la voie de retour à l'UCE (23) pour les informations de demande transférées sous forme d'impulsions de courant modulées.
